# DEMANDE DE BREVET EUROPEEN

(11) **EP 0 895 886 A1**
(43) Date de publication de la demande: **10.02.1999**
(21) Numéro de dépôt: 98401830.9
(22) Date de dépôt: 20.07.1998
(51) Int. Cl.: B60H 1/18, F01P 11/20, F01N 5/02

(54) **Procédé et système de chauffage de l'habitacle et/ou du moteur d'un véhicule automobile**

(30) Priorité: 04.08.1997 FR 9710061
(71) Demandeur: Institut Français du Pétrole, 92852 Rueil-Malmaison Cedex (FR)
(72) Inventeur: Pinchon, Philippe, 92500 Rueil-Malmaison (FR); Porot, Pierre, 75010 Paris (FR)

(57) **Abrégé**

La présente invention a pour objet un procédé de chauffage de l'habitacle et/ou du moteur (1) d'un véhicule notamment durant les démarrages à froid, comprenant les étapes qui consistent à:
- créer une combustion dans le moteur (1) qui correspond à un mélange supérieur à la stoechiométrie;
- assurer une combustion à l'échappement (2).

Le procédé selon l'invention consiste à utiliser des gaz générés par ladite combustion à l'échappement (2) pour chauffer l'habitacle et/ou une partie du moteur dudit véhicule.

Plus précisément ladite combustion à l'échappement est obtenue par un système d'allumage (4) qui initie une combustion en amont d'un échangeur de chaleur (5), les calories générées par la combustion étant récupérées par un échangeur relié à l'habitacle et/ou au moteur.

L'invention vise en outre le système de chauffage permettant de mettre en oeuvre ledit procédé.

## Description

La présente invention concerne le domaine du chauffage des véhicules automobiles et plus spécifiquement du chauffage de l'habitacle et/ou du moteur.

Un problème bien connu concerne ledit chauffage pendant les premières minutes de fonctionnement du véhicule, ou lorsqu'il fait particulièrement froid à l'extérieur du véhicule. Il s'agit dans ce cas de pouvoir élever la température rapidement et efficacement sans pour autant dépenser trop d'énergie.

On connaît diverses méthodes destinées à remplir cette Fonction.

On peut par exemple utiliser un système spécifique dédié exclusivement à la climatisation du véhicule : la demande de brevet EP-A1-0 595 699 est un exemple ce type de sol. Outre le fait qu'elle augmente le coût du véhicule, cette solution nécessite par ailleurs une dépense d'énergie non négligeable.

Il est possible de chercher à réchauffer le circuit de refroidissement du moteur conjointement à l'habitacle.

Plusieurs solutions de ce type sont connues : ainsi le brevet US 5 192 021 prévoit un échangeur de chaleur placé dans la ligne d'échappement en aval d'un convertisseur catalytique.

L'échangeur de chaleur fait partie d'un circuit spécifique qui coopère avec le circuit de refroidissement du moteur. Ainsi les hydrocarbures et autres imbrûlés de la combustion peuvent être brûlés grâce à un brûleur placé dans le circuit spécifique.

On connaît aussi, par la demande de brevet FR 2 741 675 déposée au nom de la demanderesse, un brûleur placé à l'échappement d'un véhicule, qui chauffe un échangeur de chaleur intégré dans le circuit de refroidissement du véhicule. Les calories ainsi récupérées peuvent servir à chauffer indirectement l'habitacle du véhicule.

Un autre concept connu, qui présente à peu près le même problème, consiste à réchauffer un catalyseur placé à l'échappement, et simultanément un circuit de chauffage auxiliaire de l'habitacle. La demande de brevet DE-A1-4 208 621 divulgue un concept de ce type.

Encore une fois il ne s'agit pas là de chauffer directement et donc efficacement l'habitacle ; il s'agit d'un appoint, d'un complément qui ne répond pas au problème du chauffage de l'habitacle pendant les premières minutes de fonctionnement du véhicule. Par ailleurs la puissance calorifique ainsi disponible pour le chauffage de l'habitacle semble nettement insuffisante.

Pour résoudre le problème du démarrage à froid d'un véhicule vis-à-vis notamment du chauffage de l'habitacle, il a encore été proposé des réglages moteur qui augmentent la chaleur disponible à l'échappement.

Par ailleurs, dans le but d'amorcer rapidement un catalyseur placé à l'échappement, on connaît des procédés consistant à favoriser l'allumage et la combustion des gaz d'échappement.

Les documents SAE 920400 et SAE 952417 ainsi que la demande WO 95/17586 décrivent des solutions de ce type.

La présente invention vise à résoudre notamment le problème évoqué en tête de la description, lié au déficit thermique durant les démarrages à froid d'un véhicule.

L'invention offre une solution simple, fiable et peu coûteuse à ce type de problème.

En outre la présente invention ne nécessite pas d'équipement lourd et spécifique tel qu'un brûleur. En d'autres termes l'invention vise plutôt à remplacer un équipement spécifique par un réglage, un contrôle particulier du moteur.

Bien entendu, cette solution permet un gain de place. Elle est moins complexe et moins dangereuse notamment vis-à-vis d'un concept ayant un brûleur à l'échappement.

Ainsi la présente invention a pour objet un procédé de chauffage de l'habitacle et/ou du moteur d'un véhicule notamment durant les démarrages à froids comprenant les étapes

Procédé de chauffage de l'habitacle et/ou du moteur d'un véhicule notamment durant les démarrages à froid, comprenant les étapes qui consistent à :
- créer une combustion à l'échappement.
- utiliser des gaz générés par ladite combustion à l'échappement pour chauffer l'habitacle et/ou le moteur du véhicule.

Conformément à l'invention, la combustion à l'échappement est réalisée grâce à une combustion dans le moteur qui correspond à un mélange supérieur à la stoechiométrie.

En outre l'on contrôle le fonctionnement du moteur afin de réguler la puissance et la durée de la combustion à l'échappement.

Plus précisément, ladite combustion à l'échappement cst obtenue par un système d'allumage qui initie une combustion en amont d'un échangeur de chaleur, les calories générées par la combustion étant récupérées par un échangeur relié à l'habitacle et/ou au moteur.

Additionnellement, on utilise les gaz de la combustion à l'échappement pour réchauffer un catalyseur placé à l'échappement, en aval de l'échangeur de chaleur.

Un autre aspect de l'invention concerne un système de chauffage de l'habitacle et/ou du moteur d'un véhicule notamment durant les démarrages à froid.

Selon l'invention, le système comprend une ligne d'échappement dans laquelle débouche un moyen d'injection d'air, un moyen d'allumage, ladite ligne d'échappement étant équipée d'un échangeur de chaleur, ledit échangeur étant relié avec l'habitacle et/ou une partie du moteur.

De façon particulière, le moyen d'injection d'air est disposé en amont du moyen d'allumage lui-même placé en amont de l'échangeur de chaleur relativement au sens d'écoulement des gaz dans la ligne d'échappement.

Additionnellement, un catalyseur peut être disposé dans la ligne d'échappement en aval de l'échangeur de chaleur.

Par ailleurs, le système selon l'invention peut comprendre un moyen de commande destiné notamment à le faire fonctionner pendant les premières minutes de fonctionnement du véhicule, ou dès que la température de l'habitacle est inférieure à une valeur prédéterminée.

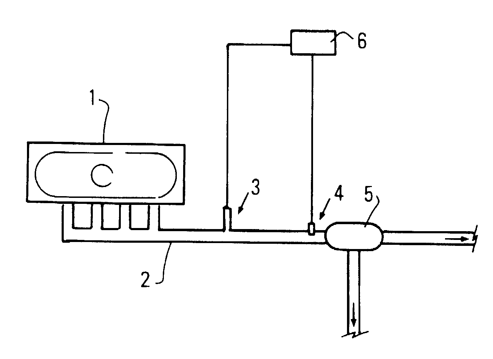

D'autres caractéristiques, avantages, détails de la présente invention apparaîtront mieux à la lecture de la description qui va suivre, faite à titre illustratif et nullement limitatif, en référence à l'unique figure annexée.

Cette figure illustre de façon très schématique une structure susceptible de mettre en oeuvre l'invention.

Le moteur 1 présente une ligne d'échappement 2 dans laquelle débouche une ligne 3 d'injection d'air. En aval de la ligne 3, relativement au sens d'écoulement des gaz d'échappement dans la ligne 2, un système d'allumage 4 est prévu.

Cette disposition, connue en soi, permet lorsque de l'air additionnel est ainsi ajouté aux gaz d'échappement via la ligne 3, de réaliser un allumage à l'échappement. L'allumage et la combustion à l'échappement sont possibles à condition de régler la richesse de combustion dans les cylindres à un niveau supérieur à la stoechiométrie, et à condition d'injecter de l'air en amont de la bougie 4. Ces conditions, lorsqu'elles sont réunies, permettent en effet de créer une composition de gaz favorable à l'allumage et à la combustion.

De façon connue, l'allumage est opéré lorsque l'on souhaite chauffer rapidement un catalyseur situé juste en aval, afin que celui-ci soit amorcé plus rapidement. La combustion est alors maintenue pendant un temps très court, de l'ordre de 1 seconde.

La présente invention prévoit, de façon différente et inattendue, de placer non pas un catalyseur mais un échangeur de chaleur 5 dans la ligne d'échappement 2 en aval du système d'allumage 4.

L'échangeur de chaleur 5 transmet alors directement les calories générées par la post-combustion à l'habitacle et/ou au moteur grâce à des liaisons appropriées, non représentées sur la figure unique.

La présente invention permet donc, par un contrôle du fonctionnement du moteur, de réchauffer de façon très modulable l'habitacle du véhicule. Il est avantageux de pouvoir réguler la puissance et la durée de la combustion à l'échappement. La présente invention permet en effet d'arrêter sur commande cette combustion.

En outre le réglage du fonctionnement du moteur étant facile à obtenir, ceci garantit une stabilité de l'inflammation des gaz à l'échappement et par là même une fiabilité du chauffage souhaité. La flamme obtenue est stable car elle est essentiellement générée par des oxydes de carbone et des hydrocarbures qui s'enflamment facilement.

La combustion (dans le moteur) à richesse supérieure à l'unité, créée et contrôlée conformément à l'invention, permet donc un contrôle de la combustion à l'échappement et par là même du chauffage de l'habitacle et/ou du moteur lui-même.

La combustion doit, selon l'invention, être entretenue sur un temps relativement long de façon à chauffer de façon significative l'habitacle. Le temps de maintien de la combustion à l'échappement est déterminé par un dispositif tel qu'un calculateur 6 en fonction notamment des information qu'il reçoit quant à la température de l'habitacle. Le calculateur 6 peut déclencher en conséquence l'arrêt ou la mise en route du système d'injection d'air 3 et de l'allumage 4 et le maintien ou non de la richesse supérieure à 1 dans les cylindres.

Sans sortir du cadre de l'invention, le calculateur peut commander les moyens 3 et 4 en relation avec un autre système de chauffage, qui fonctionne par exemple dès qu'une certaine température est atteinte dans l'habitacle et/ou dans le moteur.

Par ailleurs, la ligne d'échappement 2 peut aussi comprendre, en aval de l'échangeur 5, un catalyseur (non référencé) qui peut aussi bénéficier des calories apportées par la post-combustion à l'échappement.

## Revendications

1. Procédé de chauffage de l'habitacle et/ou du moteur (1) d'un véhicule notamment durant les démarrages à froid, comprenant les étapes qui consistent à :
- créer une combustion à l'échappement,
- utiliser des gaz générés par ladite combustion à l'échappement pour chauffer l'habitacle et/ou le moteur dudit véhicule,
caractérisé en ce que la combustion à l'échappement est réalisée grâce à une combustion dans le moteur qui correspond à un mélange supérieur à la stoechiométrie et en ce que l'on contrôle le fonctionnement du moteur afin de réguler la puissance et la durée de la combustion à l'échappement.

2. Procédé selon la revendication 1, caractérisé en ce que ladite combustion à l'échappement est obtenue par un système d'allumage (4) qui initie une combustion en amont d'un échangeur de chaleur (5), les calories générées par la combustion étant récupérées par un échangeur relié à l'habitacle et/ou au moteur.

3. Procédé selon la revendication 2, caractérisé en ce que l'on utilise additionnellement les gaz de la combustion à l'échappement pour réchauffer un catalyseur placé à l'échappement, en aval de l'échangeur de chaleur (5).

4. Système de chauffage de l'habitacle et/ou du moteur (1) d'un véhicule notamment durant les démarrages à froid, caractérisé en ce qu'il comprend une ligne d'échappement (2) dans laquelle débouche un moyen d'injection d'air (3), un moyen d'allumage (4), ladite ligne d'échappement (2) étant équipée d'un échangeur de chaleur (5), ledit échangeur étant relié avec l'habitacle et/ou une partie du moteur.

5. Système de chauffage selon la revendication 4, caractérisé en ce que le moyen d'injection d'air (3) est disposé en amont du moyen d'allumage (4) lui-même placé en amont de l'échangeur de chaleur (5) relativement au sens d'écoulement des gaz dans la ligne d'échappement.

6. Système de chauffage selon l'une quelconque des revendications 4 ou 5, caractérisé en ce qu'il comprend additionnellement un catalyseur disposé dans la ligne d'échappement (2) en aval de l'échangeur de chaleur (5).

7. Système de chauffage selon l'une quelconque des revendications 4 à 6, caractérisé en ce qu'il comprend en outre un moyen de commande (6) destiné notamment à le faire fonctionner pendant les premières minutes de fonctionnement du véhicule, ou dès que la température de l'habitacle est inférieure à une valeur prédéterminée.
